(19) Europäisches Patentamt
European Patent Office
Office européen des brevets

(11) **EP 2 277 039 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(21) Anmeldenummer: **09741937.8**

(22) Anmeldetag: **12.03.2009**

(51) Int Cl.:
*G01N 29/44* *(2006.01)*   *G01N 29/14* *(2006.01)*

(86) Internationale Anmeldenummer:
**PCT/EP2009/052938**

(87) Internationale Veröffentlichungsnummer:
**WO 2009/135719 (12.11.2009 Gazette 2009/46)**

(54) **VERFAHREN UND VORRICHTUNG ZUR KLASSIFIKATION VON SCHALLERZEUGENDEN PROZESSEN**

METHOD AND DEVICE FOR THE CLASSIFICATION OF SOUND-GENERATING PROCESSES

PROCÉDÉ ET DISPOSITIF DE CLASSEMENT DE PROCESSUS PRODUISANT DES SONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **05.05.2008 DE 102008022125**

(43) Veröffentlichungstag der Anmeldung:
**26.01.2011 Patentblatt 2011/04**

(73) Patentinhaber: **Siemens Aktiengesellschaft 80333 München (DE)**

(72) Erfinder: **HÖGE, Harald 82131 Gauting (DE)**

(56) Entgegenhaltungen:
**WO-A-99/54703      DE-A1- 4 207 728**
**DE-A1-102004 023 824**

**Beschreibung**

Die Erfindung betrifft ein Verfahren und eine Vorrichtung zur Klassifikation von schallerzeugenden Prozessen, beispielsweise von Schallsignalen, die bei Arbeitsprozessen einer Maschine oder bei chemischen Prozessen einer Anlage erzeugt werden.

Die Druckschrift DE 10 2004 023 824 A1 beschreibt ein Verfahren und eine Vorrichtung zur Beurteilung einer Güteklasse eines Objekts mittels einer zerstörungsfreien Prüfung unter Verwendung von Schallsignalen, dabei werden die Schallsignale erfasst und aus den erfassten Schallsignalen Merkmale extrahiert, um adaptierte Modelle anhand von Referenzmodellen zu bilden.

Bei den meisten Prozessen werden Schall- bzw. Schwingungssignale erzeugt, die den Prozess charakterisieren. Beispielsweise können bei chemischen Prozessen Gasblasen entstehen, die in Tankeinrichtungen öder in Röhren Geräusche verursachen. Ein weiteres Beispiel stellen Maschinen bzw. Maschinenbauelemente dar, die in einem Fertigungs- bzw. Produktionsprozess in Abhängigkeit von ihrem Betriebszustand und gegebenenfalls Umgebungsbedingungen charakteristische Schall- bzw. Schwingungssignale generieren.

Die Analyse von Messdaten technischer Prozesse wird unter anderem zur Entdeckung von defekten Bauteilen eingesetzt. Die Analyse von Messdaten, insbesondere von schallerzeugenden Prozessen, kann mittels physikalischer Modelle oder mittels statistischer Modelle des jeweiligen Prozesses durchgeführt werden. Diese Modelle werden in der Regel an einem Prototyp-Prozess unter Laborbedingungen erstellt und im Feld, beispielsweise während des Einsatzes eines Gerätes in einer Werkshalle, verwendet. Es kann dabei vorkommen, dass die Messdaten, die anhand der schallerzeugenden Prozesse gewonnen werden, von sich ändernden Umgebungssignalen, beispielsweise aufgrund einer veränderten Raumakustik, beeinflusst werden. Weiterhin kann es vorkommen, dass die untersuchte Maschine bzw. der untersuchte Prozess unter anderen Betriebsbedingungen oder mit modifizierten Maschinenteilen arbeitet. Werden die von einem Prototyp des Prozesses gewonnenen physikalischen oder statistischen Modelle unverändert im Feld eingesetzt, kann die Güte der Analyse soweit abfallen, dass keine ben werden. Diese verschiedenen Merkmale m bilden einen Merkmalsvektor V des Schallsignals.

In einem weiteren Schritt S3 des erfindungsgemäßen Verfahrens wird eine Ähnlichkeit zwischen den erfassten Schallsignals auf Basis der extrahierten Merkmale zur Gruppierung von Prozessen mit zueinander ähnlichen Schallsignalen in Prozess-Clustern C berechnet. Dabei wird beispielsweise eine Distanz $\Delta$ bzw. ein Abstand zwischen den Merkmalsvektoren V in einem mehrdimensionalen Vektorraum berechnet.

In einem Schritt S4 werden statistische Verteilungsparameter eines Referenzmodells in Abhängigkeit von den statistischen Verteilungsparametern derjenige Prozesse P adaptiert, die in demjenigen Prozess-Cluster C enthalten sind, welcher die höchste Anzahl von darin gruppierten Prozessen aufweist.

Das im Schritt S4 adaptierte Referenzmodell wird im Schritt S5 zur Klassifizierung der schallerzeugenden Prozesse P verwendet. Die Klassifikation in Schritt S5 kann beispielsweise mittels eines Maximum-Likelihood-Algorithmus erfolgen.

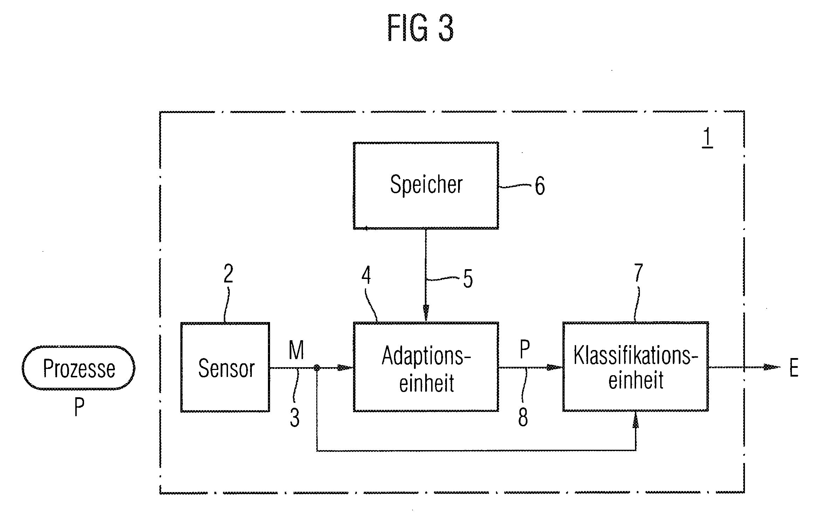

Figur 3 zeigt ein Ausführungsbeispiel einer erfindungsgemäßen Vorrichtung 1 zur Klassifikation von schallerzeugenden Prozessen. Die Vorrichtung 1 weist mindestens einen Sensor 2 zur Erfassung von Schall- bzw. Schwingungssignalen auf, die durch einen schallerzeugenden Prozess P hervorgerufen werden. Der Sensor 2 ist beispielsweise ein Mikrophon zur Erfassung eines Schallsignals. Bei einer alternativen Ausführungsform erfasst der Sensor 2 ein Körperschallsignal und ist z. B. an einem Gehäuse einer Maschine angebracht. Der Sensor 2 wandelt das akustische Signal bzw. Schwingungssignal in ein elektrisches Signal um und gibt dieses als Messdaten M über eine Leitung 3 an eine Adaptionseinheit 4 ab. Die Adaptionseinheit 4 extrahiert bestimmte Merkmale m aus den erfassten Schallsignalen der Prozesse P und berechnet eine Ähnlichkeit zwischen den erfassten Schallsignalen anhand der exbefriedigende Klassifikation des untersuchten Prozesse bzw. der untersuchten Maschine erreicht werden kann. Beispielsweise wird ein defektes Maschinenteil nicht rechtzeitig als fehlerhaft klassifiziert.

Daher werden herkömmlicherweise die physikalischen bzw. statistischen Modelle des zu untersuchenden Prozesses an die sich verändernden Bedingungen adaptiert, um eine ausreichende Güte der Analyse zu gewährleisten. Wird beispielsweise ein Arbeitsprozess eines Maschinenteils untersucht, kann anhand des durch das Maschinenteil hervorgerufenen Schallsignals ein bestimmtes Merkmal des erfassten Schallsignals zur Klassifikation herangezogen werden. Ein mögliches Merkmal des Schallsignals ist die Lautstärke des Schallsignals bzw. des Geräuschsignals. Überschreitet die Lautstärke des Schallsignals einen vorgegebenen Schwellenwert, wird das untersuchte Maschinenteil als defekt klassifiziert und ein entsprechender Fehler gemeldet. Ändern sich allerdings die Umgebungsbedingungen, beispielsweise durch ein neben das Maschinenteil gestelltes zusätzliches Gerät, beispielsweise einen Lüfter, der ein zusätzliches Geräuschsignal hervorruft, wird der Lautstärkepegel bzw. die voreingestellte Schwelle überschritten und ein fehlerfreies Maschinenteil irrtümlicherweise als fehlerhaft klassifiziert. Daher ist bei der herkömmlichen Vorgehensweise die Einstellung eines aussagekräftigen Schwellenwertes bzw. Klassifikationskriteriums aufwändig und zeitintensiv, da unter Umständen auch Geräuschsignale von defekten Maschinenteilen, die dafür extra in die Maschine installiert werden, zur Einstellung eines geeigneten Schwellenwertes gemessen werden müssen. Ein weiterer Nachteil der herkömmlichen Vorgehensweise besteht darin, dass bei einer raschen Änderung der Umgebungssignale eine notwendige Adaption der physikalischen und statistischen Modelle oft zu langsam erfolgt, so dass die benötigte Güte der Analyse nicht rechtzeitig erreicht werden kann.

Es ist daher eine Aufgabe der vorliegenden Erfindung, ein Verfahren und eine Vorrichtung zur Klassifikation von schallerzeugenden Prozessen zu schaffen, die eine Modelladaption mit geringem Rechenaufwand automatisch durchführen und die eine fehlerfreie Klassifizierung der schallerzeugenden Prozesse auch bei sich schnell ändernden Umgebungsbedingungen gewährleistet.

Diese Aufgabe wird erfindungsgemäß durch ein Verfahren mit den im Patentanspruch 1 angegebenen Merkmalen gelöst.

Die Erfindung schafft ein Verfahren zur Klassifikation von schallerzeugenden Prozessen mit den folgenden Schritten:

- Erfassen von Schallsignalen, die von den schallerzeugenden Prozessen hervorgerufen werden,

- Extrahieren von vorgegebenen Merkmalen aus den erfassten Schallsignalen für den jeweiligen schallerzeugenden Prozess,

- Berechnen einer Ähnlichkeit zwischen den erfassten Schallsignalen auf Basis der extrahierten Merkmale zur Gruppierung von Prozessen mit zueinander ähnlichen Schallsignalen in Prozess-Clustern,

- Adaptieren von statistischen Verteilungsparametern eines Referenzmodells in Abhängigkeit von den statistischen Verteilungsparametern derjenigen Prozesse, die in demjenigen Prozess-Cluster mit der höchsten Anzahl von darin gruppierten Prozessen enthalten sind, zur Erzeugung eines adaptierten Modells,

- Klassifizieren der schallerzeugenden Prozesse basierend auf dem adaptierten Modell.

Bei einer Ausführungsform des erfindungsgemäßen Verfahrens wird das Schallsignal durch einen Arbeitsprozess einer Maschine erzeugt.

Bei einer Ausführungsform des erfindungsgemäßen Verfahrens wird das Schallsignal durch einen chemischen Prozess einer Anlage erzeugt.

Bei einer Ausführungsform des erfindungsgemäßen Verfahrens wird das Schallsignal durch ein Luftschallsignal oder durch ein Körperschallsignal gebildet.

Bei einer Ausführungsform des erfindungsgemäßen Verfahrens wird das erfasste Schallsignal durch einen Sensor in ein elektrisches Signal gewandelt.

Bei einer Ausführungsform des erfindungsgemäßen Verfahrens wird das elektrische Signal tiefpassgefiltert.

Bei einer Ausführungsform des erfindungsgemäßen Verfahrens wird das tiefpassgefilterte Signal durch einen Analog-Digital-Wandler in ein digitales Signal gewandelt.

Bei einer Ausführungsform des erfindungsgemäßen Verfahrens werden vorgegebene Zeitfenster des digitalisierten Schallsignals einer Frequenztransformation zur Erzeugung eines Schallsignalspektrums unterzogen.

Bei einer Ausführungsform des erfindungsgemäßen Verfahrens werden Merkmale des Schallsignals aus dem Zeitbereich oder aus dem Frequenzbereich extrahiert.

Bei einer Ausführungsform des erfindungsgemäßen Verfahrens wird für jeden schallerzeugenden Prozess zu verschiedenen Messzeitpunkten Merkmalsvektoren, welche die extrahierten Merkmale aufweisen, gebildet.

Bei einer Ausführungsform des erfindungsgemäßen Verfahrens werden aus mehreren Merkmalsvektoren eines Prozesses für jedes Merkmal statistische Verteilungsparameter berechnet.

Bei einer Ausführungsform des erfindungsgemäßen Verfahrens weisen die statistischen Verteilungsparameter eines Merkmals einen Mittelwert und eine Varianz des jeweiligen Merkmals auf.

Bei einer Ausführungsform des erfindungsgemäßen Verfahrens wird ein Abstand zwischen den statistischen Verteilungsparametern verschiedener Schallsignale zur Ermittlung einer Ähnlichkeit zwischen den Schallsignalen berechnet.

Bei einer Ausführungsform des erfindungsgemäßen Verfahrens werden zueinander ähnliche Schallsignale von Prozessen, deren statistische Verteilungsparameter einen geringen Abstand zueinander aufweisen, in einem Prozess-Cluster gruppiert.

Bei einer Ausführungsform des erfindungsgemäßen Verfahrens werden die statistischen Verteilungsparameter des Referenzmodells auf Basis von extrahierten Merkmalen eines Schallsignals, das von einem Prototypen abgegeben wird, berechnet.

Bei einer Ausführungsform des erfindungsgemäßen Verfahrens wird die Anzahl von Prozessen innerhalb der verschiedenen gebildeten Prozess-Cluster ermittelt.

Bei einer Ausführungsform des erfindungsgemäßen Verfahrens wird derjenige Prozess-Cluster selektiert, dessen Anzahl von darin gruppierten Prozessen maximal ist.

Bei einer Ausführungsform des erfindungsgemäßen Verfahrens erfolgt die Klassifikation der schallerzeugenden Prozesse basierend auf dem adaptierten Modell mittels eines Maximum-Likelihood-Verfahrens.

Die Erfindung schafft ferner eine Vorrichtung zur Klassifikation von schallerzeugenden Prozessen mit:

- mindestens einem Sensor zur Erfassung von Schallsignalen, die von den schallerzeugenden Prozessen hervorgerufen werden,
- einem Speicher zum Speichern eines Referenzmodells, das statistische Verteilungsparameter für vorgegebene Merkmale eines Schallsignals aufweist,
- einer Adaptionseinheit zur Extraktion der Merkmale aus den erfassten Schallsignalen der Prozesse und zur Berechnung einer Ähnlichkeit zwischen den erfassten Schallsignalen anhand der extrahierten Merkmale zur Gruppierung der Prozesse in verschiedene Prozess-Cluster mit zueinander ähnlichen Schallsignalen,

wobei die Adaptionseinheit das gespeicherte Referenzmodell in Abhängigkeit von statistischen Verteilungsparametern derjenigen Prozesse, die in demjenigen Prozess-Cluster mit der maximalen Anzahl von Prozessen enthalten sind, adaptiert,

und mit einer Klassifikationseinheit, die die schallerzeugenden Prozesse basierend auf dem adaptierten Modell klassifiziert.

Im Weiteren werden bevorzugte Ausführungsformen des erfindungsgemäßen Verfahrens und der erfindungsgemäßen Vorrichtung zur Klassifikation von schallerzeugenden Prozessen unter Bezugnahme auf die beigefügten Figuren zur Erläuterung erfindungswesentlicher Merkmale beschrieben.

Es zeigen:

Figur 1          ein einfaches Anwendungsbeispiel zur Illustration des erfindungsgemäßen Verfahrens;

Figur 2          ein Ablaufdiagramm einer möglichen Ausführungsform des erfindungsgemäßen Verfahrens zum Klassifizieren von schallerzeugenden Prozessen;

Figur 3          ein Blockschaltbild eines Ausführungsbeispiels einer erfindungsgemäßen Vorrichtung zur Klassifikation von schallerzeugenden Prozessen;

Figur 4          ein Ausführungsbeispiel einer erfindungsgemäßen Vorrichtung zur Klassifikation von schallerzeugenden Prozessen;

Figuren 5A, 5B    Diagramme zur Verdeutlichung des erfindungsgemäßen Verfahrens zur Klassifikation von schallerzeugenden Prozessen;

Figur 6          ein einfaches Beispiel zur Verdeutlichung des erfindungsgemäßen Verfahrens zur Klassifikation von schallerzeugenden Prozessen;

Figuren 7A, 7B    Diagramme zur Verdeutlichung des erfindungsgemäßen Verfahrens anhand des in Figur 6 dargestellten Beispiels;

Figur 8          ein abstraktes Modell zur Verdeutlichung des erfindungsgemäßen Verfahrens zur Klassifizierung von schallerzeugenden Prozessen.

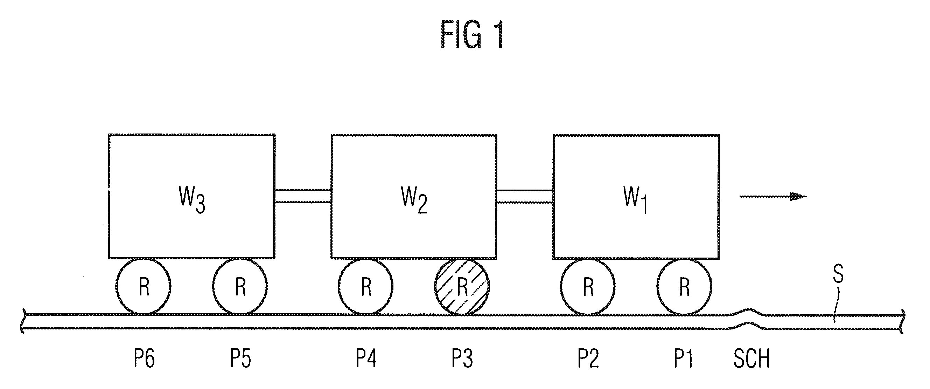

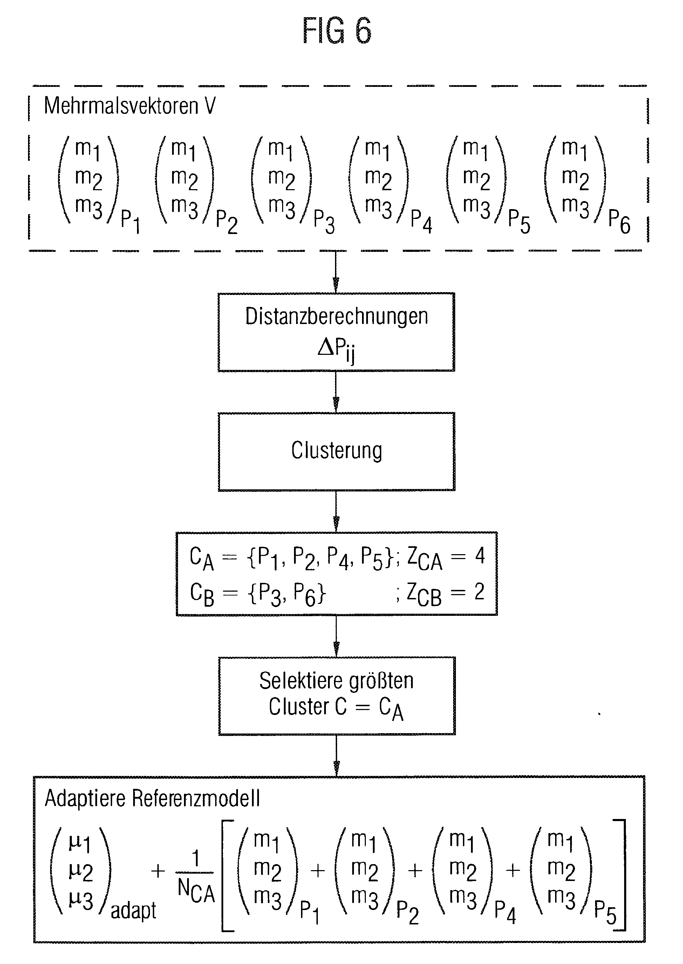

Ein einfaches Anwendungsbeispiel für das erfindungsgemäße Verfahren zur Klassifikation von schallerzeugenden Prozessen ist in Figur 1 dargestellt. Mehrere Wagen W eines Zuges bewegen sich auf einer Schiene S. Die Wagen W laufen auf Rädern R, die bei dem Rollprozess aufgrund der Reibung ein Schallsignal generieren. Dieses Schallsignal weist einerseits Luftschall und andererseits Körperschall auf. Laufen die Räder R über eine Erhöhung bzw. Schwelle der Schiene, erhöht sich die Amplitude des Schallsignals. In dem dargestellten Beispiel ist das vordere Rad des zweiten Wagens W2 defekt. Dieses defekte Rad bzw. dieses defekte Maschinenteil erzeugt ein anderes Schallsignal als die übrigen nicht defekten Räder des Zuges. Mit dem erfindungsgemäßen Verfahren ist es möglich, ein derartiges defektes Maschinenteil als fehlerhaft zu klassifizieren. In dem in Figur 6 dargestellten einfachen Anwendungsbeispiel erfolgt die Klassifikation der schallerzeugenden Prozessen verschiedener gleichartiger Maschinenteile. In dem gegebenen Beispiel ist der Prozess ein schallerzeugender Arbeitsprozess. Das erfindungsgemäße Verfahren eignet sich allerdings für jedwede Art von Prozessen, bei denen ein Schall- bzw. ein Schwingungssignal generiert wird. Beispielsweise kann auch eine Klassifikation von schallerzeugenden chemischen Prozessen erfolgen, bei denen beispielsweise Gase entstehen, die Schall- bzw. Schwingungssignale in Röhren oder Tankeinrichtungen hervorrufen.

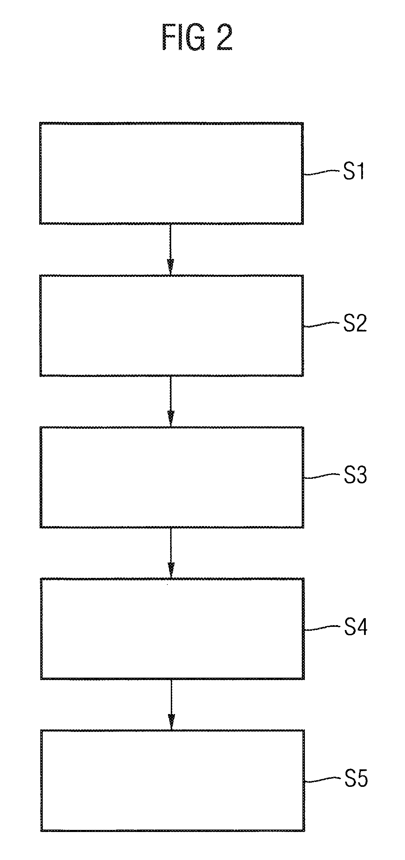

Figur 2 zeigt ein Ablaufdiagramm einer möglichen Ausführungsform des erfindungsgemäßen Verfahrens zur Klassifikation von schallerzeugenden Prozessen.

In einem Schritt S1 werden erzeugte Schallsignale der Prozesse, beispielsweise der schallerzeugenden Prozesse, die durch die sechs in Figur 1 dargestellten Räder R hervorgerufen werden, erfasst. Die Schallsignale werden beispielsweise mittels Tonaufnehmern bzw. Schwingungssensoren erfasst, die sich in der Nähe desjenigen Ortes befinden, an dem der schallerzeugende Prozess P abläuft.

In einem Schritt S2 werden bestimmte Merkmale m aus den erfassten Schallsignalen für den jeweiligen Prozess P extrahiert. Ein Schallsignal kann eine Vielzahl unterschiedlicher Merkmale m aufweisen. Ein mögliches Merkmal m ist beispielsweise die Lautstärke bzw. der Schallpegel des Schallsignals. Weitere mögliche Merkmale sind Amplituden bzw. Signalpegel bei verschiedenen Frequenzen, insbesondere Modulationsfrequenzen. Diese Frequenzen können beispielsweise durch eine Drehfrequenz $f_{rot}$ eines rotierenden bzw. drehenden Körpers vorgegeben sein. Bei dem in Figur 1 dargestellten einfachen Anwendungsbeispiel ist ein mögliches Merkmal m die Amplitude A(f) des Schallsignals bei der Drehfrequenz bzw. Rotationsfrequenz $f_{rot}$ der Räder R. Befindet sich beispielsweise in der Abrollfläche des Rades R auf dem Radius an einer Stelle ein Defekt, ruft dieser bei jeder vollen Umdrehung des Rades eine charakteristische Änderung des Schallsignals hervor. Die Anzahl der vorbestimmten Merkmale m kann variieren. Beispielsweise können 10 bis 500 Merkmale m des Schallsignals vorgegetrahierten Merkmale m. Aufgrund der berechneten Ähnlichkeit zwischen den Schallsignalen werden die Prozesse P in Prozess-Cluster C gruppiert, die zueinander ähnliche Schallsignale aufweisen. Die Adaptionseinheit 4 adaptiert anschließend ein Referenzmodell, das beispielsweise über eine Leitung 5 aus einem Speicher 6 ausgelesen wird in Abhängigkeit von statistischen Verteilungsparametern derjenigen Prozesse P, die in demjenigen Prozess-Cluster C mit der maximalen Anzahl von darin gruppierten Prozessen P enthalten sind.

Eine Klassifikationseinheit 7, die über Leitungen 8 mit der Adaptionseinheit 4 verbunden ist, klassifiziert anschließend die schallerzeugenden Prozesse P basierend auf dem durch die Adaptionseinheit 4 adaptierten Modell und den Messdaten M der Prozesse P.

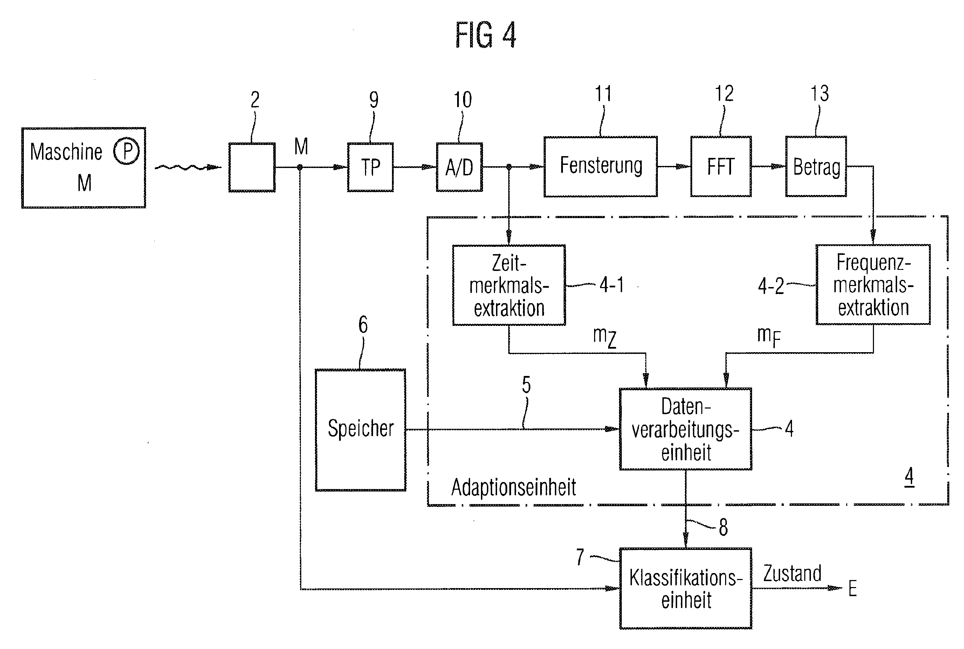

Figur 4 zeigt ein mögliches Ausführungsbeispiel einer erfindungsgemäßen Vorrichtung 1 zur Klassifikation von schallerzeugenden Prozessen P.

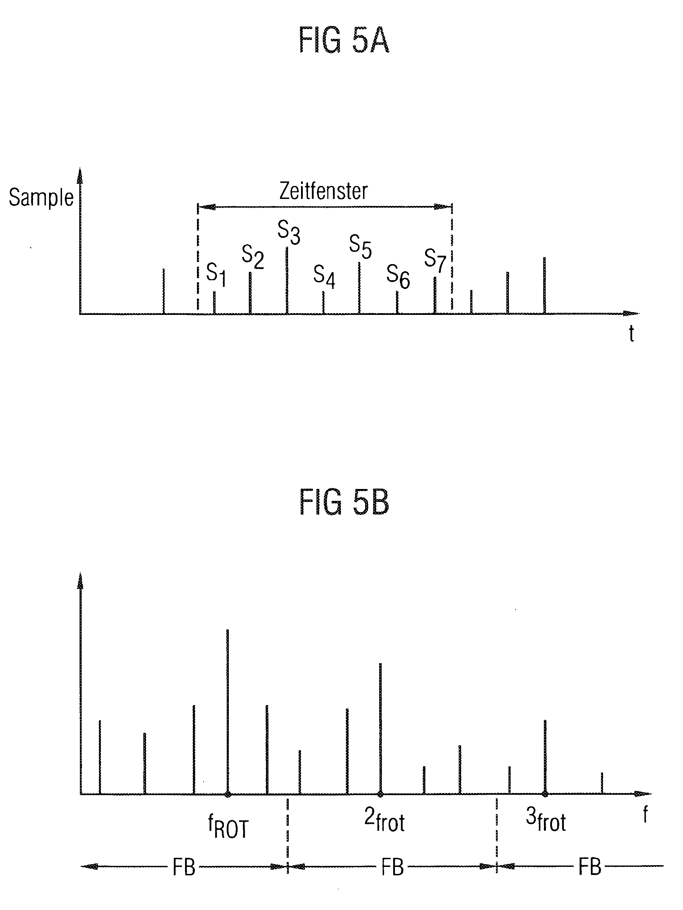

In einer Maschine erzeugt ein schallerzeugender Prozess P ein Schall bzw. Schwingungssignal, das durch ein Mikrophon 2 erfasst wird. Das Luftschallsignal wird durch das Mikrophon 2 in ein elektrisches Signal gewandelt und durch ein Tiefpassfilter 9 tiefpassgefiltert. Das tiefpassgefilterte Signal wird durch einen Analog-Digital-Wandler 10 mit einer bestimmten Abtastfrequenz abgetastet und digitalisiert. Figur 5A zeigt ein Beispiel für ein digitalisiertes Schallsignal, das von dem Analog-Digital-Wandler 10 abgegeben wird. Eine Fensterungseinheit 11 bildet Zeitfenster bzw. Ausschnitte des digitalisierten Signals. Bei dem in Figur 5A dargestellten Beispiel werden sieben Abtastwerte bzw. Samples s1-s7 in einem Zeitfenster ausgegeben. Die Dauer bzw. der Umfang des Zeitfensters ist vorzugsweise einstellbar. Das Zeitfenster, welches mehrere Abtastwerte s enthält, wird einer Frequenz-Transformationseinheit 12 zugeführt. Das Zeitfenster des digitalisierten Schallsignals wird durch die Frequenz-Transformationseinheit 12 einer Frequenztransformation zur Erzeugung eines Schallsignalspektrums unterzogen. Beispielsweise wird das gefensterte Schallsignal einer Fast-FourierTransformation FFT unterzogen, um ein entsprechendes Schallsignalspektrum des Zeitfensters zu bilden. Anschließend bildet eine Betragseinheit 13 einen Betrag des Schallsignalspektrums. Figur 5B zeigt ein Beispiel für ein Spektrum, das durch einen drehenden Körper mit einer bestimmten Rotationsfrequenz $f_{rot}$ hervorgerufen wird. Bei der Grundfrequenz $f_{rot}$ und den harmonischen Oberwellen weist das Frequenzspektrum typischerweise Amplituden-Maxima auf.

Bei dem in Figur 4 dargestellten Ausführungsbeispiel werden sowohl aus dem Zeit-Schallsignal als auch aus dem Frequenzspektrum Merkmale m des Schallsignals extrahiert. Hierzu weist die Adaptionseinheit 4 eine Einheit 4-1 zur Zeit-Merkmalsextraktion und eine Einheit 4-2 zur Frequenz-Merkmalsextraktion auf. Bei den Merkmalen $m_Z$ im Zeitbereich kann es sich beispielsweise um die summierten Amplituden der verschiedenen Abtastwerte in dem Zeitfenster bzw. um die Lautstärke des Schallsignals handeln. Bei den Frequenzmerkmalen können beispielsweise die Amplituden bei der Grundfrequenz $f_{rot}$ und bei harmonischen Oberwellen, d. h. Vielfachen der Grundfrequenz, ausgewertet werden. Alternativ kann auch beispielsweise die Energie des Signals innerhalb eines Frequenzbereichs FB des Spektrums als Merkmal herangezogen werden. Für jeden Frequenzbereich FB kann ein entsprechend berechneter Energiewert, der sich beispielsweise aus der Amplitude der Spektralanteile ergibt, berechnet werden. Umfasst als Spektrum beispielsweise 30 Frequenzbänder ergeben sich somit 30 verschiedene Frequenzmerkmale $m_F$. Die aus dem Zeitbereich gewonnen Merkmale $m_Z$ und die aus dem Frequenzbereich gewonnen Merkmale $m_F$ werden einer Datenverarbeitungseinheit 4-3 innerhalb der Adaptionseinheit 4 zugeführt. Die Datenverarbeitungseinheit 4 ist beispielsweise ein Mikroprozessor, auf dem ein Programm abläuft. Die Datenverarbeitungseinheit 4 lädt aus dem Speicher 6 ein gespeichertes Referenzmodell. Die Datenverarbeitungseinheit 4 berechnet anhand der Merkmale $m_Z$, $m_F$ der erfassten Schallsignale der Prozesse P einen Abstand $\Delta$ zwischen den erfassten Schaltsignalen in einem mehrdimensionalen Merkmalsraum, wobei diejenigen Prozesse P, die zueinander ähnliche Schaltsignale aufweisen bzw. deren berechneter Abstände $\Delta$ zueinander gering sind in einem Prozess-Cluster C gruppiert werden. Anschließend selektiert die Datenverarbeitungseinheit 4 denjenigen Prozess-Cluster C, der die maximale Anzahl $Z_{max}$ von Prozessen P beinhaltet. Das aus dem Speicher 6 geladene Referenzmodel wird dann an die statistischen Verteilungsparameter derjenigen Prozesse P adaptiert, die in dem größten Prozess-Cluster C enthalten sind. Die Klassifikationseinheit 7 klassifiziert dann die schallerzeugenden Prozesse P basierend auf dem adaptierten Modell. Der durch die Klassifikationseinheit 7 ermittelte Betriebszustand bzw. Fehlerzustand wird ausgegeben.

Fig. 6 zeigt ein einfaches Beispiel zur Verdeutlichung des erfindungsgemäßen Verfahrens. Nach der Erfassung der Schaltsignale in Schritt S1 werden vorbestimmte Merkmale m von verschiedenen Prozessen P extrahiert. Beispielsweise werden die Schallsignale der sechs verschiedenen Räder R, wie sie in Fig. 1 dargestellt sind, erfasst. In dem in Fig. 6 dargestellten einfachen Beispiel umfasst jeder Merkmalsvektor V drei Merkmale m1, m2, m3, beispielsweise einen Signalpegel des Schaltsignals als Merkmal m1, eine Amplitude A(f) bei einer bestimmten Frequenz f, etwa der Rotationsfrequenz $f_{rot}$ in Fig. 5B als Merkmal m2 und die Energie E des Signals in einem bestimmten Frequenzband FB als Merkmal m3.

Auf Basis der Merkmalsvektoren V der verschiedenen erzeugten Prozesse P1 bis P6 bzw. der verschiedenen Maschinenteile erfolgt eine Ähnlichkeitsberechnung. Hierzu werden Distanzen bzw. Abstände zwischen den Merkmalen m berechnet. Bei einer möglichen Ausführungsform werden zu verschiedenen Zeitpunkten $t_1$ bis $t_M$ die Merkmalsvektoren V für die verschiedenen Prozesse P berechnet und daraus ein Vektor V bzw. eine Matrix statistischer Verteilungsparameter berechnet.

Die folgende Gleichung zeigt veranschaulicht die Vorgehensweise.

$$P_1 \; : \; \begin{pmatrix} m_1 \\ m_2 \\ m_3 \end{pmatrix}_{t_1} \quad \begin{pmatrix} m_1 \\ m_2 \\ m_3 \end{pmatrix}_{t_2} \cdots \begin{pmatrix} m_1 \\ m_2 \\ m_3 \end{pmatrix}_{t_M} \rightarrow \begin{pmatrix} \mu_1 \\ \mu_2 \\ \mu_3 \end{pmatrix}_{P_1}$$

$$\tag{1}$$

$$P_2 \; : \; \begin{pmatrix} m_1 \\ m_2 \\ m_3 \end{pmatrix}_{t_1} \quad \begin{pmatrix} m_1 \\ m_2 \\ m_3 \end{pmatrix}_{t_2} \cdots \begin{pmatrix} m_1 \\ m_2 \\ m_3 \end{pmatrix}_{t_M} \rightarrow \begin{pmatrix} \mu_1 \\ \mu_2 \\ \mu_3 \end{pmatrix}_{P_2}$$

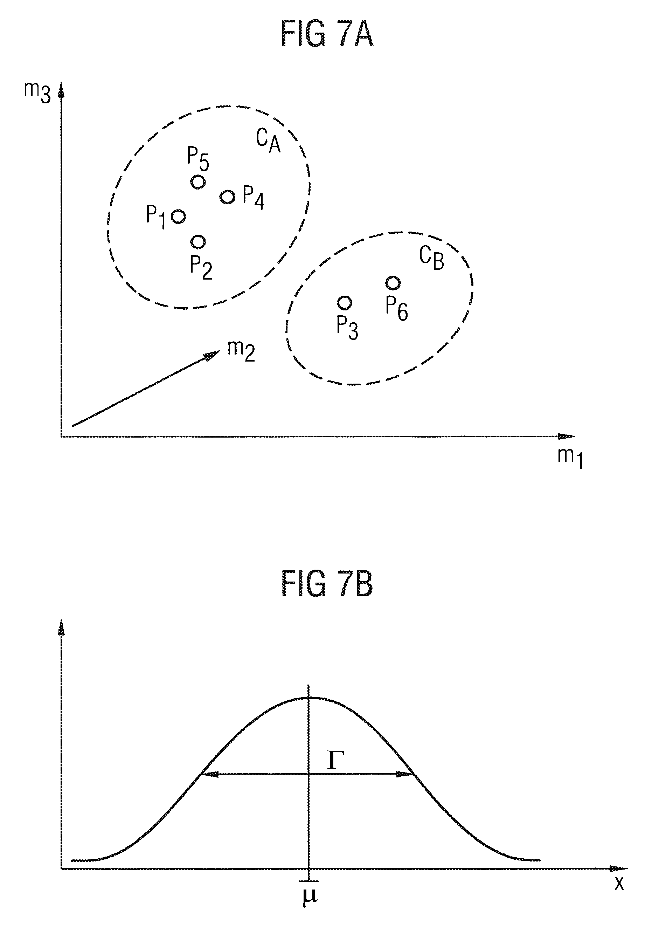

Bei dem angegebenen Beispiel ist der statistische Verteilungsparameter der Mittelwert $\mu$ des Merkmals m über eine vorgegebene Anzahl von Messpunkten ti. Neben dem statistischen Verteilungsparameter-Mittelwert $\mu$ können weitere statistische Verteilungsparameter, wie beispielsweise die Varianz $\sigma$ gerechnet werden. Dabei wird z. B. eine Gaussverteilung gemäß Fig. 7B der statischen Verteilung zugrundegelegt. Auch andere statistische Verteilungen mit anderen statistischen Verteilungsparameter sind möglich.

Auf Basis der ermittelten statistischen Verteilungsparameter der verschiedenen Prozesse P kann paarweise zwischen Prozessen eine Distanz berechnet werden. Beispielsweise wird ein Distanz $\Delta$ zwischen zwei Prozessen P1, P2 wie folgt berechnet:

$$Distan z (P_1 \, / \, P_2) = \mid \mu_{1p1} - \mu_{1p2} \mid^2 + \mid \mu_{2p1} - \mu_{2p2} \mid^2 + \mid \mu_{3p1} - \mu_{3p2} \mid^2$$

$$\tag{2}.$$

Sobald die Ähnlichkeit zwischen den verschiedenen Schallsignalen der verschiedenen Prozesse P bzw. der Distanzen $\Delta$ zwischen den Schallsignalen anhand der statistischen Verteilungsparameter berechnet ist können diejenigen Prozesse P, welche zueinander ähnliche Schallsignale aufweisen, in Prozess-Cluster C gruppiert werden. Fig. 7A zeigt ein einfaches Beispiel für die verschiedenen Prozesse P1 - P6 in einem dreidimensionalen Merkmalsraum, der durch die Merkmale m1, m2, m3 aufgespannt wird. Bei dem in Fig. 7A dargestellten Beispiel sind die Schallsignale der Prozesse P1, P2, P4, P5 zueinander ähnlich und bilden einen Cluster $C_A$ während die Schallsignale bzw. die statistischen Verteilungsparameter der Schallsignale der Prozesse P3, P6 davon abweichen und einen eigenen davon separaten Prozess-Cluster $C_B$ bilden. Da die Wahrscheinlichkeit, dass die Anzahl der nicht defekten Maschinenteile bzw. Prozesse P größer ist als die Anzahl der defekten bzw. defekt werdenden Maschinenteile bzw. Prozesse kann davon ausgegangen werden, dass die schallerzeugenden Prozesse P1, P2, P4, P5 des größten Clusters $C_A$ nicht defekte Maschinenteile repräsentieren. Da die Anzahl $Z_A$ der innerhalb des Prozess-Clusters $C_A$ gruppierten Prozesse P größer ist als die Anzahl $Z_B$ der Prozesse P innerhalb des Prozess-Clusters $C_B$ wird der Prozess-Cluster $C_A$ selektiert und ein Referenzmodell des Maschinenteils, wie in Fig. 6 dargestellt, anhand der Merkmale m der in dem Prozess-Cluster $C_A$ enthaltenen Prozesse P adaptiert. Beispielsweise wird als statistischer Parameter eines gespeicherten Referenzmodells der Mittelwert p durch den Mittelwert der Merkmale m der Prozesse P innerhalb des Prozess-Clusters $C_A$ gebildet. Bei einer möglichen Ausführungsform erfolgt die Berechnung des adaptierten Referenzmodells in Abhängigkeit von den statistischen Verteilungsparametern derjenigen Prozesse P, die in dem größten Prozess-Cluster enthalten sind und in Abhängigkeit des bisherigen statistischen Verteilungsparameter des Referenzmodells. Bei dieser Ausführungsform erfolgt die Adaption somit iterativ bzw. evolutionär.

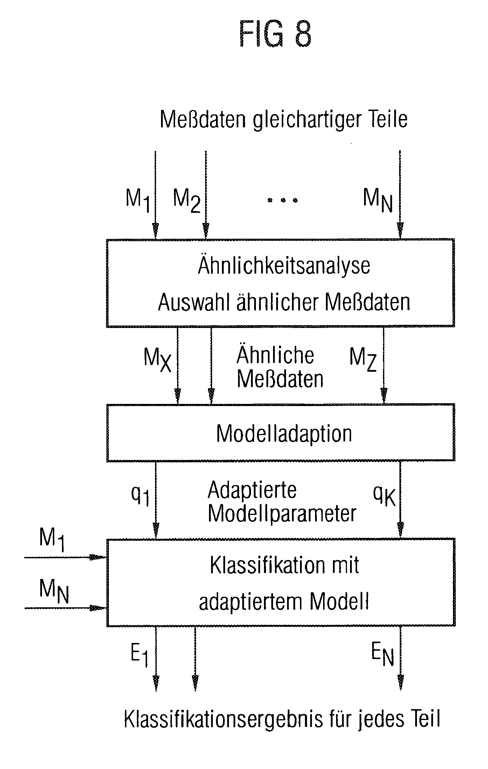

Fig. 8 zeigt ein abstraktes mathematisches Modell zur Erklärung des erfindungsgemäßen Verfahrens. Von verschiedenen gleichartig aufgebauten Maschinenteilen, beispielsweise von den in Fig. 1 dargestellten Rädern R, werden Messdaten M gewonnen, die einer Ähnlichkeitsanalyse zur Auswahl ähnlicher Messdaten unterzogen werden. Die ähnlichen Messdaten bzw. die zueinander ähnliche Schaltsignale werden ausgewählt und zur Modelladaption herangezogen. Die Klassifikation eines Prozesses P erfolgt dann anhand der Messdaten M des jeweiligen Prozesses P und statistischer Modellparameter q des Modells. Dies führt zu Klassifikationsergebnissen E, die beispielsweise angeben, ob ein Maschinenteil defekt ist oder nicht. Bei einer solchen Modelladaption werden die Modellparameter q bzw. die statistische Verteilungsparameter, etwa der Mittelwert $\mu$ oder die Varianz $\sigma$ einer statistischen Verteilung laufend durch ähnliche Messdaten M adaptiert. Alle Messsignale bzw. Messdaten M werden durch die Klassifikationseinheit 7 auf Basis des adaptierten Modells klassifiziert. Das erfindungsgemäße Verfahren nutzt die Tatsache aus, dass bei Maschinen, in denen mehrere gleichartige Maschinenteile eingebaut sind, die meisten Maschinenteile nicht defekt sind und deren Messdaten zur Adaption des Modells eingesetzt werden können. Durch das erfindungsgemäße Verfahren entfallen aufwändige Anpassungsmaßnahmen zur Analyse defekter Maschinenteile. Insbesondere ist es bei dem erfindungsgemäßen Verfahren nicht notwendig, bewusst fehlerhafte Maschinenteile einzubauen und anhand von deren Geräuschsignalen eine Modelladaption durchzuführen. Bei dem im erfindungsgemäßen Verfahren eingesetzten statistischen Modellen lässt sich die Ähnlichkeit beispielsweise über Log-Likelihood Scores der Messdaten bestimmen, wobei aus der Ähnlichkeit der Scores geschlossen werden kann, ob die Messdaten zu einem nicht defekten Maschinenteil bzw. Prozess gehören oder nicht. Da mehrere Maschinenteile an der Messung beteiligt sind muss bei unsicherer Datenlage nicht jeder Messwert bei dem erfindungsgemäßen Verfahren berücksichtigt werden.

**Patentansprüche**

1.    Verfahren zur Klassifikation von schallerzeugenden Prozessen (P) mit den folgenden Schritten:

> (a) Erfassen (S1) von Schallsignalen, die von schallerzeugenden Prozessen (P) hervorgerufen werden;
> (b) Extrahieren (S2) von Merkmalen (m) aus den erfassten Schallsignalen für den jeweiligen Prozess (P);
> (c) Berechnen (S3) einer Ähnlichkeit zwischen den erfassten Schallsignalen auf Basis der extrahierten Merkmale (m) zur Gruppierung von Prozessen (P) mit zueinander ähnlichen Schallsignalen in Prozess-Clustern (C);
> (d) Adaptieren (S4) von statistischen Verteilungsparametern eines Referenzmodells in Abhängigkeit von den statistischen Verteilungsparametern derjenigen Prozesse (P), die in demjenigen Prozess-Cluster (C) mit der höchsten Anzahl (Z) von darin gruppierten Prozessen (P) enthalten sind, zur Erzeugung eines adaptierten Modells; und
> (e) Klassifizieren (S5) der schallerzeugenden Prozesse (P) basierend auf dem adaptierten Modell.

2.    Verfahren nach Anspruch 1, wobei das Schallsignal durch einen Arbeitsprozess einer Maschine erzeugt wird.

3.    Verfahren nach Anspruch 1, wobei das Schallsignal durch einen chemischen Prozess einer Anlage erzeugt wird.

4.    Verfahren nach Anspruch 1, wobei das Schallsignal durch einen Luftschallsignal oder durch ein Körperschallsignal gebildet wird.

5.    Verfahren nach Anspruch 1, wobei das erfasste Schallsignal durch einen Sensor (2) in ein elektrisches Signal gewandelt wird.

6.    Verfahren nach Anspruch 5, wobei das elektrische Signal durch ein Tiefpaßfilter (9) tiefpaßgefiltert wird.

7.    Verfahren nach Anspruch 6, wobei das tiefpassgefilterte Signal durch einen Analog-Digitalwandler (10) in ein digitales Signal gewandelt wird.

8. Verfahren nach Anspruch 7, wobei vorgegebene Zeitfenster des digitalisierten Schallsignals einer Frequenztransformation zur Erzeugung eines Schallsignalspektrums unterzogen werden.

9. Verfahren nach Anspruch 8, wobei Merkmale (m) des Schallsignals aus dem Zeitbereich oder aus dem Frequenzbereich extrahiert werden.

10. Verfahren nach Anspruch 1, wobei für jeden schallerzeugenden Prozess (P) zu verschiedenen Messzeitpunkten (t) Merkmalsvektoren (V), welche die extrahierten Merkmale (m) aufweisen, gebildet werden.

11. Verfahren nach Anspruch 10, wobei aus mehreren Merkmalsvektoren (V) eines Prozesses (P) für jedes Merkmal (m) statistische Verteilungsparameter berechnet werden.

12. Verfahren nach Anspruch 11, wobei die statistischen Verteilungsparameter eines Merkmals (m) einen Mittelwert ($\mu$) und eine Varianz ($\Gamma^2$) des jeweiligen Merkmals (m) aufweisen.

13. Verfahren nach Anspruch 1, wobei ein Abstand ($\Delta$) zwischen den statistischen Verteilungsparametern verschiedener Schallsignale zur Ermittlung einer Ähnlichkeit zwischen den Schallsignalen berechnet wird.

14. Verfahren nach Anspruch 13, wobei zueinander ähnliche Schallsignale von Prozessen (P) deren statistische Verteilungsparameter einen geringen Abstand zueinander aufweisen in einem Prozess-Cluster (C) gruppiert werden.

15. Verfahren nach Anspruch 1, wobei die statistischen Verteilungsparameter des Referenzmodells auf Basis von extrahierten Merkmalen eines Schallsignals, das von einem Prototyp abgegeben wird, berechnet wird.

16. Verfahren nach Anspruch 14, wobei jeweils eine Anzahl (Z) von Prozessen (P) innerhalb von verschiedenen gebildeten Prozess-Clustern (C) ermittelt wird.

17. Verfahren nach Anspruch 16, wobei derjenige Prozess-Cluster (C) selektiert wird, dessen Anzahl (Z) von darin gruppierten Prozessen (P) maximal ist.

18. Verfahren nach Anspruch 1, wobei die Klassifikation der schallerzeugenden Prozesse (P) basierend auf dem adaptierten Modell mittels eines Maximum-Likelihood-Verfahrens erfolgt.

19. Vorrichtung zur Klassifikation von schallerzeugenden Prozessen (P) mit:

    (a) mindestens einem Sensor (2) zur Erfassung von Schallsignalen, die von den schallerzeugenden Prozessen (P) hervorgerufen werden;
    (b) einem Speicher (6) zum Speichern eines Referenzmodells, das statistische Verteilungsparameter für vorgegebene Merkmale (m) eines Schallsignals aufweist;
    (c) einer Adaptionseinheit (4) zur Extraktion der Merkmale (m) aus den erfassten Schallsignalen der Prozesse (P) und zur Berechnung einer Ähnlichkeit zwischen den erfassten Schallsignalen anhand der extrahierten Merkmale (m) zur Gruppierung der Prozesse (P) in verschiedene Prozess-Cluster (C) mit zueinander ähnlichen Schallsignalen, wobei die Adaptionseinheit (4) das gespeicherte Referenzmodell in Abhängigkeit von statistischen Verteilungsparametern derjenigen Prozesse (P), die in demjenigen Prozess-Cluster (C) mit einer maximalen Anzahl (Z) von Prozessen (P) enthalten sind, adaptiert;
    (d) und mit einer Klassifikationseinheit (7), die die schallerzeugenden Prozesse (P) basierend auf dem adaptierten Modell klassifiziert.

20. Computerprogramm zur Durchführung des Verfahrens nach Anspruch 18.

21. Datenträger, der das Computerprogramm nach Anspruch 20 speichert.

**Claims**

1. Method of classification of sound-generating processes (P) with the following steps:

    (a) Detection (S1) of sound signals which are generated by sound-generating processes (P);

(b) Extraction (S2) of characteristics (m) from the detected sound signals for the respective process (P);

(c) Calculation (S3) of a similarity between the detected sound signals based on the extracted characteristics (m) for grouping processes (P) with sound signals similar to each other into process clusters (C);

(d) Adaptation (S4) of statistical distribution parameters of a reference model depending on the statistical distribution parameters of those processes (P) which are contained in that process cluster (C) with the highest number (Z) of processes (P) grouped within it, for creating an adapted model; and

(e) Classification (S5) of the sound-generating processes (P) based on the adapted model.

2. Method according to claim 1, with the sound signal being generated by a working process of a machine.

3. Method according to claim 1, with the sound signal being generated by a chemical process of a system.

4. Method according to claim 1 with the sound signal being formed by an airborne signal or by a body sound signal.

5. Method according to claim 1, with the detected sound signal being converted by a sensor (2) into an electrical signal.

6. Method according to claim 5, with the detected electrical signal being lowpass filtered by a lowpass filter (9).

7. Method according to claim 6, with the analogue sound signal being converted by an analogue-to-digital converter (10) into a digital signal.

8. Method according to claim 7, with predetermined time windows of the digitised sound signal being subjected to a frequency transformation to create a sound signal spectrum.

9. Method according to claim 8, with characteristics (m) of the sound signal being extracted from the time range or from the frequency range.

10. Method according to claim 1 with, for each sound-generating process (P), characteristic vectors (V) which have the extracted characteristics (m) being formed at different measurement times (t).

11. Method according to claim 10 with statistical distribution parameters being calculated for each characteristic (m) from a number of characteristic vectors (V) of a process (P).

12. Method according to claim 11, with the statistical distribution parameters of a characteristic (m) exhibiting an average value ($\mu$) and a variance $\Gamma^2$ of the respective characteristic (m).

13. Method according to claim 1, with a distance ($\Delta$) being calculated between the statistical distribution parameters of different sound signals for calculating a similarity between the sound signals.

14. Method according to claim 13, with sound signals similar to one another of processes (P) of which the statistical distribution parameters exhibit a small distance from each other being grouped into a process cluster (C).

15. Method according to claim 1, with the statistical distribution parameters of the reference model being calculated on the basis of extracted characteristics of a sound signal which is output by a prototype.

16. Method according to claim 14, with a number (Z) of processes (P) being determined within differently formed process clusters (C).

17. Method according to claim 16, with that process cluster (C) being selected for which the number (Z) of processes (P) grouped within it is a maximum.

18. Method according to claim 1, with the sound-generating processes (P) being classified on the basis of the adapted model by means of a maximum-likelihood method.

19. Device for classification of sound-generating processes (P) with:

(a) at least one sensor (2) for detecting sound signals which are generated by the sound-generating processes (P);

(b) a memory (6) for storing a reference model having statistical distribution parameters for predetermined characteristics (m) of a sound signal;

(c) an adaptation unit (4) for extraction of the characteristics (m) from the detected sound signals of the processes (P) and for calculating a similarity between the detected sound signals on the basis of the extracted characteristics (m) for grouping the processes (P) into different process clusters (C) with sound signals similar to one another, with the adaptation unit (4) adapting the stored reference model as a function of statistical distribution parameters of those processes (P) which are contained in the process cluster (C) with a maximum number (Z) of processes (P);

(d) and with a classification unit (7) which classifies the sound-generating processes (P) on the basis of the adapted model.

**20.** Computer program for executing the method according to claim 18.

**21.** Data medium which stores the computer program according to claim 20.

**Revendications**

**1.** Procédé de classement de processus de production de sons (P), comportant les étapes suivantes :

(a) détection (S1) de signaux sonores issus de processus de production de sons (P) ;
(b) extraction (S2) de caractéristiques (m) hors des signaux sonores détectés pour le processus respectif (P) ;
(c) calcul (S3) d'une similitude entre les signaux sonores détectés, sur la base des caractéristiques extraites (m), pour regrouper des processus (P) avec des signaux sonores similaires entre eux dans des clusters de processus (C) ;
(d) adaptation (S4), afin de générer un modèle adapté, de paramètres de distribution statistiques d'un modèle de référence en fonction des paramètres de distribution statistiques des processus (P) qui sont contenus dans le cluster de processus (C) avec le nombre maximal (Z) de processus (P) regroupés dedans, et
(e) classement (S5) des processus de production de sons (P) sur la base du modèle adapté.

**2.** Procédé selon la revendication 1, le signal sonore étant généré par un processus de travail d'une machine.

**3.** Procédé selon la revendication 1, le signal sonore étant généré par un processus chimique d'une installation.

**4.** Procédé selon la revendication 1, le signal sonore étant formé par un signal sonore aérien ou un signal sonore solidien.

**5.** Procédé selon la revendication 1, le signal sonore détecté étant converti en un signal électrique par un capteur (2).

**6.** Procédé selon la revendication 5, le signal électrique étant filtré par un filtre passe-bas (9).

**7.** Procédé selon la revendication 6, le signal filtré par un filtre passe-bas étant converti en un signal numérique par un convertisseur analogique-numérique (10).

**8.** Procédé selon la revendication 7, la fenêtre de temps prédéfinie du signal sonore numérisé étant soumise à une transformation en fréquence pour générer un spectre de signaux sonores.

**9.** Procédé selon la revendication 8, des caractéristiques (m) du signal sonore étant extraites de la plage des temps ou de la plage des fréquences.

**10.** Procédé selon la revendication 1, des vecteurs de caractéristiques (V) comportant les caractéristiques extraites (m) étant formés pour chaque processus de production de sons (P) à différents instants de mesure (t).

**11.** Procédé selon la revendication 10, des paramètres de distribution statistiques étant calculés pour chaque caractéristique (m) à partir de plusieurs vecteurs de caractéristiques (V) d'un processus (P).

**12.** Procédé selon la revendication 11, les paramètres de distribution statistiques d'une caractéristique (m) présentant une valeur moyenne ($\mu$) et une variance ($\Gamma^2$) de la caractéristique respective (m).

**13.** Procédé selon la revendication 1, un écart ($\Delta$) entre les paramètres de distribution statistiques de différents signaux sonores étant calculé pour déterminer une similitude entre les signaux sonores.

**14.** Procédé selon la revendication 13, des signaux sonores similaires entre eux de processus (P) dont les paramètres de distribution statistiques présentent un faible écart entre eux étant regroupés dans un cluster de processus (C).

**15.** Procédé selon la revendication 1, les paramètres de distribution statistiques du modèle de référence étant calculés sur la base de caractéristiques extraites d'un signal sonore qui est émis par un prototype.

**16.** Procédé selon la revendication 14, respectivement un nombre (Z) de processus (P) étant déterminé au sein de différents clusters de processus formés (C).

**17.** Procédé selon la revendication 16, le cluster de processus (C) dont le nombre (Z) de processus regroupés dedans (P) est maximal étant sélectionné.

**18.** Procédé selon la revendication 1, le classement des processus de production de sons (P) s'effectuant au moyen d'une méthode de maximum de vraisemblance sur la base du modèle adapté.

**19.** Dispositif de classement de processus de production de sons (P), comportant :

(a) au moins un capteur (2) pour détecter des signaux sonores qui sont issus de processus de production de sons (P) ;
(b) une mémoire (6) pour stocker un modèle de référence qui comporte des paramètres de distribution statistiques pour des caractéristiques prédéfinies (m) d'un signal sonore ;
(c) une unité d'adaptation (4) pour extraire les caractéristiques (m) hors des signaux sonores détectés des processus (P) et pour calculer une similitude entre les signaux sonores détectés, à l'aide des caractéristiques extraites (m), pour regrouper les processus (P) en différents clusters de processus (C) avec des signaux sonores similaires entre eux, l'unité d'adaptation (4) adaptant le modèle de référence stocké en fonction de paramètres de distribution statistiques des processus (P) qui sont contenus dans le cluster de processus (C) contenant un nombre maximal (Z) de processus (P), et
(d) une unité de classement (7) qui classe les processus de production de sons (P) sur la base du modèle adapté.

**20.** Programme informatique pour exécuter le procédé selon la revendication 18.

**21.** Support de données qui stocke le programme informatique selon la revendication 20.

FIG 1

# FIG 2

# FIG 3

EP 2 277 039 B1

```
        ┌─────────────────────────────────────────────────────────┐
        │                                                      1    │
        │              ┌───────────────┐                            │
        │              │   Speicher    │───6                        │
        │              └───────────────┘                            │
        │                      │                                    │
        │         2            │ 5            7                      │
        │    ┌─────────┐       ▼        ┌──────────────────┐        │
 ┌─────────┐ │         │ M  4 ┌───────┐  │                  │        │
 │Prozesse │ │ Sensor  │───→ │Adaptions-│ P │Klassifikations-│──→ E
 └─────────┘ │         │     │einheit  │──→│einheit         │        │
    P        └─────────┘     └───────┘  8 │                  │        │
        │              3                  └──────────────────┘        │
        │                                                             │
        └─────────────────────────────────────────────────────────┘
```

Prozesse P

Sensor 2

M

3

Adaptions-einheit 4

Speicher 6

5

P 8

Klassifikations-einheit 7

E

FIG 4

# FIG 5A

# FIG 5B

# FIG 6

Mehrmalsvektoren V

$$\begin{pmatrix} m_1 \\ m_2 \\ m_3 \end{pmatrix}_{P_1} \begin{pmatrix} m_1 \\ m_2 \\ m_3 \end{pmatrix}_{P_2} \begin{pmatrix} m_1 \\ m_2 \\ m_3 \end{pmatrix}_{P_3} \begin{pmatrix} m_1 \\ m_2 \\ m_3 \end{pmatrix}_{P_4} \begin{pmatrix} m_1 \\ m_2 \\ m_3 \end{pmatrix}_{P_5} \begin{pmatrix} m_1 \\ m_2 \\ m_3 \end{pmatrix}_{P_6}$$

Distanzberechnungen
$\Delta P_{ij}$

Clusterung

$C_A = \{P_1, P_2, P_4, P_5\}; Z_{CA} = 4$
$C_B = \{P_3, P_6\} \qquad ; Z_{CB} = 2$

Selektiere größten
Cluster $C = C_A$

Adaptiere Referenzmodell

$$\begin{pmatrix} \mu_1 \\ \mu_2 \\ \mu_3 \end{pmatrix}_{adapt} + \frac{1}{N_{CA}} \left[ \begin{pmatrix} m_1 \\ m_2 \\ m_3 \end{pmatrix}_{P_1} + \begin{pmatrix} m_1 \\ m_2 \\ m_3 \end{pmatrix}_{P_2} + \begin{pmatrix} m_1 \\ m_2 \\ m_3 \end{pmatrix}_{P_4} + \begin{pmatrix} m_1 \\ m_2 \\ m_3 \end{pmatrix}_{P_5} \right]$$

# FIG 7A

# FIG 7B

# FIG 8

Meßdaten gleichartiger Teile

$M_1$  $M_2$  . . .  $M_N$

Ähnlichkeitsanalyse
Auswahl ähnlicher Meßdaten

$M_X$  Ähnliche  $M_Z$
       Meßdaten

Modelladaption

$q_1$  Adaptierte  $q_K$
      Modellparameter

$M_1$

$M_N$

Klassifikation mit
adaptiertem Modell

$E_1$  $E_N$

Klassifikationsergebnis für jedes Teil

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004023824 A1